# EUROPEAN PATENT APPLICATION

(11) **EP 3 617 408 A2**
(43) Date of publication of application: **04.03.2020**
(21) Application number: 19186955.1
(22) Date of filing: 18.07.2019
(51) Int. Cl.: E02F 3/84, B60K 37/06, E02F 9/20

(54) **MODULAR OPERATOR INTERFACE SYSTEM FOR A WORK VEHICLE**

(30) Priority: 10.08.2018 US 201816100403
(71) Applicant: CNH Industrial Italia S.p.A., 10135 Torino (IT)
(72) Inventor: DAUTH, Kyle, Arlington, Texas 76006 (US); WINEMILLER, Max H., Deerfield, Illinois 60015 (US)
(74) Representative: CNH Industrial IP Department

(57) **Abstract**

A modular operator interface system may include a controller and first and second interface modules configured to be installed along opposed left and right sides, respectively, of a steering assembly of a work vehicle. The first interface module may include a first module housing and a plurality of first interface elements supported by the first module housing. The first interface elements include one or more first EH-related interface elements configured to provide an operator input(s) to the controller associated with one or more first EH-based control functions for the work vehicle. The second interface module may include a second module housing and a plurality of second interface elements supported by the second module housing. The second interface elements include one or more second EH-related interface elements configured to provide an operator input(s) to the controller associated with one or more second EH-based control functions for the work vehicle.

## Description

### FIELD OF THE INVENTION

The present subject matter relates generally to work vehicles and, more particularly, to a modular operator interface system for a work vehicle, such as a motor grader.

### BACKGROUND OF THE INVENTION

Motor graders, also known as "road graders," are used in many aspects of road construction and maintenance, as well as for material moving and finish grading for general purposes. Motor graders can be used to shape the ground for general purposes, such as developing ditches, and for shaping the final surface of a roadbed. In maintenance operations, motor graders can be used, for example, to clean and reform ditches, to reshape and contour worn road beds, to spread added material on a roadbed, to remove snow and the like. To achieve such versatility in operation, motor graders are highly controllable with respect to the set up and operation thereof.

A motor grader can include an articulating frame having a rear frame portion carrying an engine, transmission, operator's cab and the like, and an elongated front frame portion that includes adjustable front wheels and an earth scraping blade which commonly is referred to as a moldboard. Carrying and adjustment structure for the moldboard allows adjustments for angle, tilt and roll of the moldboard as well as lateral side shifting.

Manual controls or input devices are typically provided for various operating and adjustment aspects of a motor grader, such as steering, speed, moldboard positioning, frame articulation, wheel angle orientation and power input. For instance, conventional motor graders typically include a mechanical control lever arrangement for controlling the hydraulic functions of the motor grader, with each control lever being mechanically coupled to a corresponding valve (e.g., via a pivot joint(s) and/or linkage rod(s)) of the hydraulic system. Specifically, it is typical to include an assembly of control levers disposed along the left-side of the steering assembly for mechanically controlling certain hydraulic functions of the motor grader and an assembly of control levers disposed along the right-side of the steering assembly for mechanically controlling other hydraulic functions of the motor grader.

In recent years, many manufacturers have transitioned away from the conventional, mechanical lever interface arrangement and have, instead, opted to install armrest-based joystick controls for electronically controlling the operation of the motor grader. While such joystick controls provide certain advantages, many operators still prefer the feel and usability of the mechanical lever arrangement.

Accordingly, a modular operator interface system that can provide many of the same advantages of armrest-based joystick controls while accommodating operators that prefer more traditional interface arrangements would be welcomed in the technology.

### BRIEF DESCRIPTION OF THE INVENTION

Aspects and advantages of the invention will be set forth in part in the following description, or may be obvious from the description, or may be learned through practice of the invention.

In one aspect, the present subject matter is directed to an operator interface system for a work vehicle. The system comprises a controller and first and second interface modules configured to be installed within a cab of the work vehicle along opposed left and right sides, respectively, of a steering assembly of the work vehicle. The first interface module may include a first module housing and a plurality of first interface elements supported by the first module housing and communicatively coupled to the controller. The first interface elements include one or more first EH-related interface elements configured to provide one or more operator inputs to the controller associated with one or more first EH-based control functions for the work vehicle. The second interface module may include a second module housing and a plurality of second interface elements supported by the second module housing and communicatively coupled to the controller. The second interface elements include one or more second EH-related interface elements configured to provide one or more operator inputs to the controller associated with one or more second EH-based control functions for the work vehicle. The controller is configured to control one or more components of the work vehicle based on inputs received from the first and second interface modules during operation of the work vehicle.

In another aspect, the present subject matter is directed to a work vehicle. The work vehicle may include an operator's cab, a steering assembly positioned within the cab, and first and second interface modules installed within the cab along opposed left and right sides, respectively, of the steering assembly. The first interface module includes a first module housing and a plurality of first interface elements supported by the first module housing. The first interface elements include one or more first EH-related interface elements configured to provide one or more operator inputs associated with one or more first EH-based control functions for the work vehicle. The second interface module includes a second module housing and a plurality of second interface elements supported by the second module housing. The second interface elements including one or more second EH-related interface elements configured to provide one or more operator inputs associated with one or more second EH-based control functions for the work vehicle. The work vehicle also includes a plurality of electro-hydraulic valves, with each of the electro-hydraulic valves being associated with an EH-based control function of the one or more first and second EH-based control function. In addition, the work vehicle includes a controller communicatively coupled to the first and second interface elements and the electro-hydraulic valves. The controller is configured to control an operation of a respective valve of the electro-hydraulic valves based on an input received from one of the one or more first and second EH-related interface elements.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a side view of one embodiment of a work vehicle in accordance with aspects of the present subject matter, particularly illustrating the work vehicle configured as a motor grader;
FIG. 2 illustrates a schematic view of components of one embodiment of a modular operator interface system installed within a cab of a work vehicle, such as the cab of the motor grader shown in FIG. 1, in accordance with aspects of the present subject matter, particularly illustrating first and second interface modules installed relative to a steering assembly of the work vehicle;
FIG. 3 illustrates another schematic view of the system components shown in FIG., 2, particularly illustrating the first and second interface modules removed from the steering column of the work vehicle.
FIG. 4 illustrates a schematic view of an alternative embodiment of the interface modules shown in FIGS. 2 and 3, particularly illustrating the interface modules pivotally coupled to the steering column to allow the interface modules to be moved relative to the steering column between operational and non-operational positions;
FIGS. 5 and 6 illustrate schematic views of components of another embodiment of a modular operator interface system installed within a cab of a work vehicle, such as the cab of the motor grader shown in FIG. 1, in accordance with aspects of the present subject matter, particularly illustrating the system including first and second interface modules configured to be installed relative to a steering assembly of the work vehicle and first and second seat-based interface modules configured to be installed relative to an operator's seat of the work vehicle; and
FIG. 7 illustrates a schematic, more detailed view of one embodiment of a modular operator interface system in accordance with aspects of the present subject matter system.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to a modular operator interface system for a work vehicle. Specifically, in several embodiments, the system includes first and second interface modules configured to be installed relative to a steering assembly of the work vehicle. For example, the first interface module may be installed along the left side of the steering assembly (e.g., on the left side of the steering column) and the second interface module may be installed along the right side of the steering assembly (e.g., on the right side of the steering column). Each interface module includes a plurality of interface elements (e.g., knobs, buttons, switches, levers, etc.), with each interface element being communicatively coupled to a controller of the system to allow the operator to provide inputs to the controller for electronically controlling the operation of one or more components of the work vehicle. For instance, in several embodiments, at least a portion of the interface elements are assigned to electro-hydraulic (EH) control functions for the work vehicle, such as by allowing the operator to provide inputs to the controller for electronically controlling suitable EH valves that regulate the supply of hydraulic fluid to one or more hydraulically actuated components of the vehicle's hydraulic system.

In several embodiments, the disclosed system may be configured for use within a motor grader. In such embodiments, the interface modules may, for example, serve as a replacement interface arrangement for the conventional mechanical lever arrangement. For instance, the interface elements provided on the left-side and right-side interface modules may be used to allow for electro-hydraulic control of the associated valves of the motor grader, thereby replacing the otherwise mechanically-activated hydraulic control functions provided with the conventional lever arrangement. In such instance, the arrangement of the EH-related interface elements on the interface modules may, for example, be selected to match the order and/or relative positioning of the levers of the conventional lever arrangement, thereby providing a very intuitive interface arrangement for operators that are accustomed to more traditional arrangements.

Moreover, in certain embodiments, the disclosed system may also be used in combination with seat-based interface modules, such as armrest-mounted joystick modules. For instance, the interface modules installed relative to the steering assembly may be configured to be removed therefrom when it is desired to use the seat-based interface modules. In such instance, the interface modules may be decoupled or otherwise removed from their mounted locations relative to the steering assembly and the seat-based interface modules may be installed relative to the operator's seat to allow such modules to be used to control the operation of the vehicle. If the operator subsequently desires to use the steering-based interface modules, the seat-based interface modules may be decoupled or otherwise removed from their mounted locations relative to the operator's seat and the steering-based interface modules may be re-installed relative to the steering assembly to allow such modules to be used to control the operation of the vehicle.

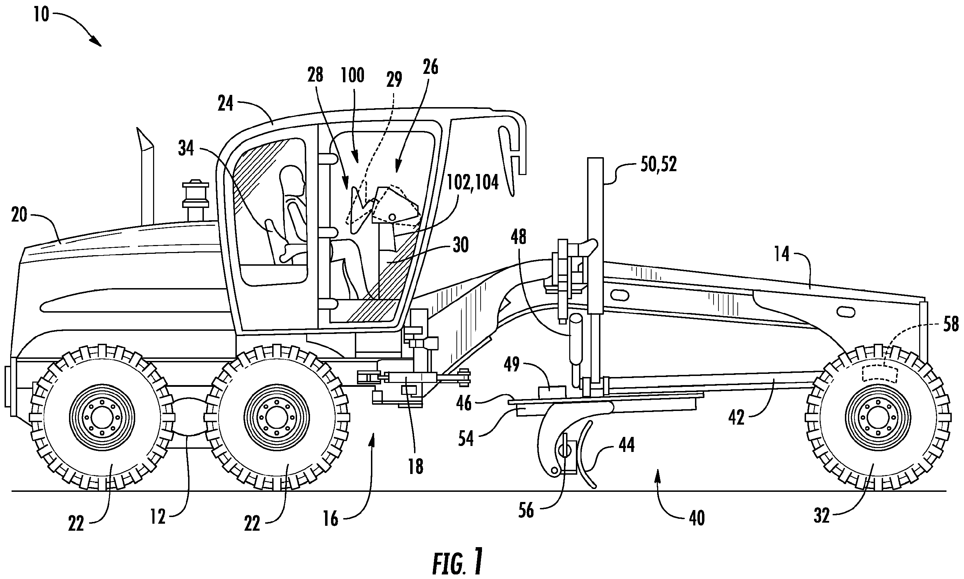

Referring now to the drawings, FIG. 1 illustrates a side view of one embodiment of a work vehicle in accordance with aspects of the present subject matter. As shown, the work vehicle corresponds to a motor grader 10. However, in other embodiments, the work vehicle may correspond to any other suitable type of work vehicle, including any suitable type of construction vehicle.

As shown, the motor grader 10 has an articulating frame including a rear frame portion 12 and a front frame portion 14 pivotally connected to each other via an articulating joint 16. Accordingly, the rear frame portion 12 and the front frame portion 14 can be arranged in a straight line alignment, or can be arranged at various angular relationships to the left and to the right, pivoted about a vertical axis through the articulating joint 16. Additionally, one or more articulating adjustment cylinders 18 may be provided for adjusting the articulation of the vehicle 10.

Moreover, a plurality of components may be supported by or coupled to the rear and front frame portions 12, 14 of the grader 10. For example, the rear frame portion 12 may support both an engine 20 configured to provide power for driving a tandem set of driven, ground engaging rear wheels 22 supporting the rear frame portion 12 and an operator's cab 24 configured to provide an operating environment for the operator. For instance, an operator console 26 may be provided that includes or is associated with a plurality of operator controls and/or interface elements (e.g., knobs, levers, buttons, switches, display devices, etc.) for providing operator inputs to control the operation of the motor grader 10. As shown, a steering assembly 28 including, for example, a steering wheel 29 supported by associated support structure (e.g., a steering column 30) is located within the cab 24 to allow the operator to provide steering inputs for controlling the steering angle of a set of steerable front wheels 32 supporting the front frame portion 12. Additionally, an operator's seat 34 may be provided within the cab 24 to provide a seating location for the operator when controlling the operation of the grader 10.

As will be described below, a modular operator interface system 100 may be installed within or otherwise provided in association with the operator's cab 24 to provide the operator with an improved control interface arrangement for controlling the operation of the grader 10. For instance, in one embodiment, first and second (or left and right) interface modules 102, 104 (one of which is shown) may be installed within the cab 24 along opposed sides of the steering assembly 28 to provide the operator with various interface elements for controlling one or more components of the grader 10. Moreover, in one embodiment, first and second seat-based interface modules (not shown) may be configured to be installed relative to the operator's seat 34 that can, for example, be used as an alternative to the interface modules 102, 104 provided adjacent to the steering assembly 28 when desired by the operator. In such an embodiment, the modular operator interface system 100 may provide a human-machine interface that can be reconfigured by the operator based on his/her preferences, such as by removing the seat-based interface modules and only using the interface modules 102, 104 or by removing the interface modules 102, 104 and only using the seat-based interface modules.

As shown in FIG. 1, the motor grader 10 also includes a moldboard assembly 40 supported by the front frame portion 14 by a drawbar 42. In general, the moldboard assembly 40 includes a moldboard 44 coupled to a plate gear or circle 46, which is, in turn, supported by the drawbar 42. A center shift cylinder 48 is provided for controlling the angular orientation of the moldboard 44 relative to front frame portion 14 while a circle clocking drive 49 is provided to adjust the rotational orientation of the circle 46 (and, thus, the moldboard 44) relative to the drawbar 42. Additionally, lift cylinders 50, 52 (one of which is shown) are operatively connected to the moldboard 44 along the left and right sides of the front frame portion 14 for lifting the moldboard 44 vertically. As is generally understood, the lift cylinders 50, 52 are independently operable and controllable so that the moldboard 44 can be lifted and held at a level orientation or with either side (i.e., the left side or the right side of the moldboard 44) held higher or lower than the other side so that the bottom or cutting edge of moldboard 44 is at an angle to horizontal. Moreover, as shown in FIG. 1, a tilt cylinder 54 is provided to adjust the relative position of the top edge of the moldboard 44 with respect to the bottom edge of moldboard 44 so that moldboard 44 can be tilted forward or backward to adjust the pitch of the moldboard 44. Furthermore, a side shift cylinder 56 adjusts the moldboard 44 laterally toward either side from the centerline of the front frame portion 14 to move the windrow of material forming at the heel end of the moldboard 44 away from the travel path of the rear wheels 22, and/or to reach material outside the intended drive path.

Additionally, in one embodiment, the front wheels 32 are provided with a wheel lean control system for leaning or tilting the front wheels 32 to either side of true vertical. For instance, a lean cylinder 58 may be provided in operative association with each of the front wheels 32 to allow the wheels 32 to be leaned or tilted relative to vertical. As is generally understood, wheel lean can be used to counteract draft forces operating against the motor grader 10 traveling in the desired direction.

As will be described below, it should be appreciated that the various hydraulic cylinders and/or hydraulically-actuated drives described herein may be configured to be electronically controlled using electro-hydraulic (EH) valves provided in operative association with each cylinder. For instance, one or more EH valves may be provided in association with each of the articulating adjustment cylinder 18, center shift cylinder 48, circle clocking drive 48, lift cylinders 50, 52, tilt cylinder 54, side shift cylinder 56, lean cylinders 58, and/or any other suitable hydraulically actuated components of the work grader 10 to regulate the operation of such components, thereby allowing the operation of the related components to be electronically controlled. Additionally, in several embodiments, one or more position sensors and/or other sensors may be provided in operative association with the cylinders/drives and/or any other suitable components of the work grader to provide feedback for controlling the operation of the EH valves.

It should be understood that the general description and depiction of the motor grader 10 shown in FIG. 1 is merely exemplary, and may differ from one machine to another. For example, the operator's cab, operator console and operator controls can be positioned on the front frame portion in some motor grader designs. Additionally, the motor grader 10 may include various other related and/or optional components. For instance, an optional implement attachment may be included on the grader 10, such as a scarifier mounted to the front frame portion 14 forward of the moldboard assembly 40. In such an embodiment, a hydraulic cylinder(s) may be provided in operative association with the scarifier for raising and lowering the scarifier relative to the ground. Additionally, the motor grader 10 may also include various additional hydraulic cylinders or drives for adjusting the position and/or orientation of one or more components of the grader 10, such as circle side shift lever for moving the circle 46 laterally to the left or the right and/or the like.

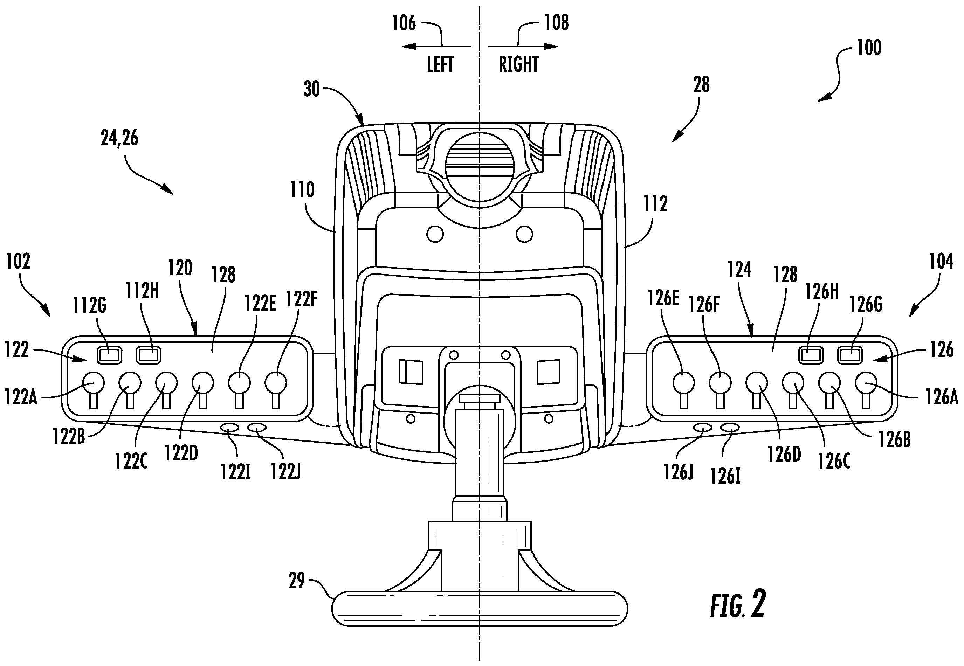

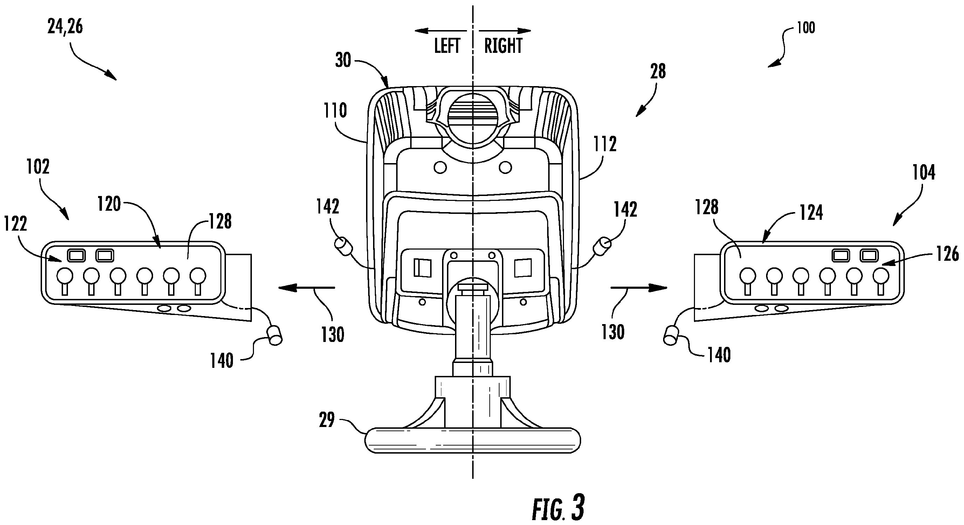

Referring now to FIGS. 2 and 3, a schematic view of one embodiment of components of a modular operator interface system 100 installed within a cab of a work vehicle is illustrated in accordance with aspects of the present subject matter. For purposes of description, the system components will generally be described with reference to being installed within the cab 24 of the motor grader 10 described above with reference to FIG. 1. However, it should be appreciated that, in other embodiments, the various system components may be installed within and/or otherwise used in connection with any other suitable work vehicle have any other suitable vehicle configuration.

As shown in FIGS. 2 and 3, the system 100 includes first and second interface modules 102, 104 configured to be installed relative to the steering assembly 28 of the grader 10. Specifically, the first interface module 102 is configured to be installed along the left side of the steering assembly 28 (e.g., as indicated by arrow 106 extending from the centerline of the assembly 28), such as by mounting the first interface module 102 to a first side 110 of the associated steering column 30. Similarly, the second interface module 104 is configured to be installed along the right side of the steering assembly 28 (e.g., as indicated by arrow 108 extending from the centerline of the assembly 28), such as by mounting the second interface module 104 to an opposed second side 112 of the steering column 30. As such, during operation of the work grader 10, the operator may interact with the first interface module 102 using his/her left hand and may interact with the second interface module 104 using his/her right hand.

It should be appreciated by those of ordinary skill in the art that, in accordance with aspects of the present subject matter, the interface modules 102, 104 may generally be installed within the grader 10 as a replacement for the conventional mechanical lever arrangement typically provided within the cab 24 along both sides of the steering assembly 28. For example, the first interface module 102 may serve as a replacement for the conventional left-side lever assembly while the second interface module 104 may serve as a replacement for the conventional right-side lever assembly. In such an embodiment, as will be described below, the control functionality typically associated with each of the various levers of the conventional lever arrangement may be incorporated into one or both of the interface modules 102, 104 to allow for electro-hydraulic control of the grader components associated with such control functionality.

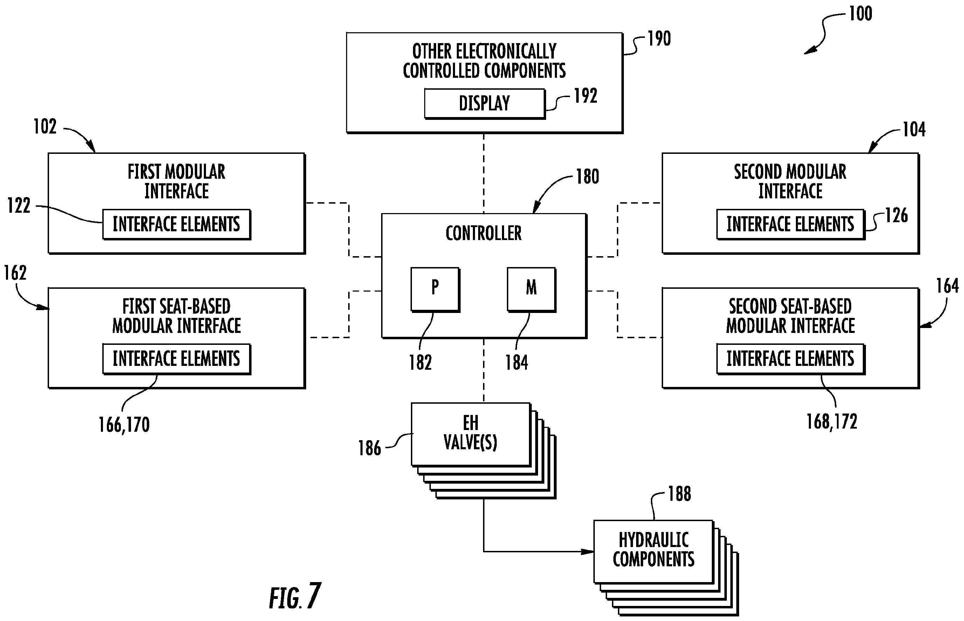

In general, each interface module 102, 104 may include a module housing configured to support or house a plurality of interface elements (e.g., knobs, levers, buttons, switches, and/or the like) along opposed sides 110, 112 of the steering column 30 (and the opposed sides of the steering assembly 28) for easy access by the operator. For instance, the first interface module 102 may include a first module housing 120 configured to support or house a plurality of first interface elements 122 (e.g., elements 122A-122J shown in FIG. 2). Similarly, the second interface module 104 may include a second module housing 124 configured to support or house a plurality of second interface elements 126 (e.g., elements 126A-126J shown in FIG. 2). As will be described below with reference to FIG. 7, the various interface elements 122, 126 may be communicatively coupled to a controller 180 (FIG. 7) of the disclosed system 100 to allow the operator to provide operator inputs for electronically controlling the operation of the motor grader 10. For instance, each interface element 122, 126 may be associated with a control function of the motor grader 10, such as one or more EH-based control functions and/or one or more non-EH-based control functions. Accordingly, by providing an operator input via one of the interface elements 122, 126, the controller may electronically control the operation of the component(s) of the motor grader 10 associated with the corresponding control function.

Each module housing 120, 124 may generally be configured to serve as the support structure or frame for its respective interface module 102, 104. For instance, each module housing 120, 124 may be formed from a single component or an assembly of components that, when coupled to the steering column 30, form a rigid or semi-rigid framework or structure for supporting the various interface elements 122, 126 relative to the steering assembly 28. In this regard, it should be appreciated that each module housing 120, 124 may generally be configured to be coupled to the steering column 30 using any suitable attachment structure and/or methodology known in the art. For instance, each module housing 120, 124 and/or the steering column 30 may include or be associated with mounting structure (e.g., mounting flanges and/or other hardware) configured to permit the module housings 120, 124 to be coupled to the steering column 30, such as by using one or more fasteners (e.g., bolts, screws, pins, connectors, hooks and/or the like) and/or alignment features (e.g., locator pins, etc.). For instance, in one embodiment, one or more hooks or other engagement components may be provided at the top of each module housing 120, 124 (or at a corresponding location on the steering column 30) that are configured to be received within corresponding openings or other elements provided on the steering column 30 (or each module housing 120, 124). In such an embodiment, one or more locator pins may be provided at the bottom of each module housing 120, 124 (or at a corresponding location on the steering column 30) to accurately align each housing 120, 124 relative to the steering column 30. In addition, a single bolt or T-bolt design may be provided for coupling the bottom of each module housing 120, 124 to the steering column 30 to facilitate quick and easy installation without requiring any tools.

Additionally, in several embodiments, each module housing 120, 124 may be configured to be removably coupled to its respective side 110, 112 of the steering column 30, thereby allowing the interface modules 102, 104 to be removed as desired. For instance, as shown in FIG. 3, when it is not desirable to utilize the interface modules 102, 104 to control the operation of the motor grader 10, the module housings 120, 124 may be decoupled from the steering column 30 (e.g., as indicated by arrows 130 in FIG. 3) to permit the interface modules 102, 104 to be moved to a desired location (e.g., a storage location within the cab 24). Thereafter, if it is subsequently desired to again use the interface modules 102, 104 to control the operation of the motor grader 10, the interface modules 102, 104 may be reinstalled relative to the steering column 30. Such modularity may allow for the disclosed system 100 to provide the operator with an interface that can be reconfigured to meet the demands and/or preferences of the operator. For instance, as will be described below, the system 100 may, in several embodiments, also incorporate seat-based interface modules (e.g., joystick modules) configured to be installed relative to the operator's seat 34 (FIG. 1) that can used as an alternative to the interface modules 102, 104 for controlling the operation of the motor grader 10. In such embodiments, the different modules may be installed within the cab 24, as desired, based on the operator's preferences. For instance, if the operator prefers the interface arrangement provide by the interface modules 102, 104, the operator may install the interface modules 102, 104 relative to the steering assembly 28 and ignore or remove the seat-based interface modules. Similarly, if the operator prefers the interface arrangement provide by the seat-based interface modules, the operator may install the seat-based interface modules relative to the operator's seat 24 and ignore or remove the interface modules 102, 104 from the steering assembly 28.

As indicated above, each of the first and second interface modules 102, 104 includes a plurality of interface elements 122, 126 supported by its respective module housing 120, 124. In general, each interface element 122, 126 may correspond to an input element or component configured to allow the operator to provide an input to the system controller 180 (FIG. 7) associated with a given control function for the motor grader 10, with each control function being associated with electronically controlling the operation of one or more components of the motor grader 10. For instance, suitable control functions may include, but are not limited to, various EH-based and non-EH-based control functions, such as moldboard lifting, circle clocking, moldboard tilting, moldboard side shifting, automatic machine control activation/deactivation, co-pilot slope adjustments, co-pilot activation/deactivation, speed adjustments, drawbar side shifting, articulation adjustments, wheel lean adjustments, drawbar center shifting, differential lock activation/deactivation, auxiliary hydraulic functions, and/or the like.

In several embodiments, one or more of the interface elements 122, 126 provided on each of the interface modules 102, 104 may be configured as an EH-related interface element associated with a given EH-based control function for the motor grader 10. In such embodiments, operator inputs received from the EH-related interface elements may be used by the system controller to regulate the operation of corresponding EH valves, thereby allowing the controller to automatically control the operation of the associated hydraulically activated components of the motor grader 10. For instance, specific EH-based control functions for the motor grader 10 may include, but are not limited to, moldboard lifting (e.g., left and/or right lifting via control of the respective lift cylinders 50, 52), moldboard side shifting (e.g., via control of the side shift cylinder 56), moldboard tilting (e.g., via control of the tilt cylinder 54), drawbar center shifting (e.g., via control of the center shift cylinder 48), articulation adjustments (e.g., via control of the articulation adjustment cylinder 18), wheel lean adjustments (e.g., via control of the lean cylinders 48), circle clocking adjustments (e.g., via control of the circle clocking drive 49) and/or any other suitable E-H based control functions (e.g., auxiliary hydraulic functions).

In several embodiments, the control functions associated with the interface elements 122, 126 provided on each of the interface modules 102, 104 may be selected and/or assigned according to a predetermined interface arrangement. For instance, in several embodiments, the EH-related interface elements provided on each of the interface modules 102, 104 may be arranged and/or selected to match or otherwise be similar or consistent with the mechanical lever arrangement conventionally used for motor graders 10. For instance, in the illustrated embodiment, at least a portion of the interface elements 122 provided on the first interface module 102 may be configured as EH-related interfaces elements (e.g., first, second, third, and fourth interface elements 122A-122D) associated with the typical control functions of the levers provided within the left-side lever assembly of the conventional lever arrangement (e.g., left-side moldboard lifting, moldboard side shifting, moldboard tilting, circle clocking, and/or the like) while at least a portion of the interface elements 126 provided on the second interface module 104 may be configured as EH-related interfaces elements (e.g., first, second, third, and fourth interface elements 126A-126D) associated with the typical control functions of the levers provided within the right-side lever assembly of the conventional lever arrangement (e.g., right-side moldboard lifting, wheel lean adjustments, articulation adjustments, drawbar center shifting and/or the like). In such an embodiment, the EH-related interface elements associated with typical lever-controlled functions may be ordered or arranged along their respective interface modules 102, 104 to match the relative order or arrangement of the corresponding levers, such as by selecting the location of each EH-related interface element relative to its respective interface module 102, 104 to match the conventional location of the corresponding lever relative to the steering assembly 28. As a result, use of the interface modules 102, 104 may be very intuitive for an operator familiar with the conventional lever arrangement. For instance, the operator may place his/her hand in the same location to manipulate the interface element associated with the desired control function as he/she would typically do when using the conventional lever arrangement.

In addition to selecting or assigning the control functions associated with the various interface elements 122, 126 according to a predetermined interface arrangement (or as an alternative thereto), the control function assignment for each interface element 122, 126 may be selected or adjusted by the operator. For instance, in one embodiment, the operator may be allowed to assign each interface element 122, 126 to a given control function for the motor grader 10. In such an embodiment, the operator may customize the specific interface arrangement provided by each interface module 102, 104 to match his/her preferences. It should be appreciated that the operator may be allowed to reassign control functions to given interface elements 122, 126 using any suitable interface structure and/or methodology. For instance, in one embodiment, the system controller may be configured to display a graphical user interface on an associated display 192 (FIG. 7) of the work vehicle 10 that allows the operator to match control functions for the grader 10 to specific interface elements 122, 126 on the modules 102, 104.

As shown particularly shown in FIG. 2, each interface module 102, 104 includes a plurality of different types of interface elements 122, 126, such as a plurality of knobs or levers (e.g., elements 122A-122F on the first module 102 and elements 126A-122F on the second module 104), a plurality of toggle switches (e.g., elements 122G, 122H on the first module 102 and elements 126G, 122H on the second module 104), and a plurality of buttons (e.g., elements 122I, 122J on the first module 102 and elements 126I, 122J on the second module 104). However, in other embodiments, the interface modules 102, 104 may include any other suitable type(s) of interface element(s) (including any suitable combination of element types) and may generally include any number of interface elements. Additionally, in the illustrated embodiment, the knobs or levers of each interface module 102, 104 are positioned in a row along the length of an outer face 128 each housing 120, 126, with the toggle switches being positioned above the knobs or levers on the outer face 128 and the buttons being positioned on each housing 120, 126 below the outer face 128. However, in other embodiments, the specific positioning of the interface elements 122, 126 relative to the housings 120, 124 and relative to one another may take any other form. It should also be appreciated that, although the interface modules 102, 104 are shown in the illustrated embodiment as being mirror images of each other, the configuration of each module 102, 104 may differ from the other (e.g., including differing interface arrangements, such as different types, numbers, and/or relative positioning of the interface elements 122, 126).

As indicated above, the various interface elements 122, 126 are configured to be communicatively coupled to the system controller 180 (FIG. 7) for receiving the associated inputs from the operator. Thus, it should be appreciated that, when installing and/or removing the interface modules 102, 104 relative to the steering assembly 28, a communicative link or connection provided between each module 102, 104 and the controller may be connected and/or disconnected during the installation/removal process. For instance, as shown in FIG. 3, each interface module 102, 104 may include one or more electrical connectors and/or ports 140 configured to be connected to and/or disconnected from corresponding electrical connectors and/or ports 142 provided relative to the steering assembly 28 (e.g., on the steering column 30) when installing and/or removing the interface modules 102, 104.

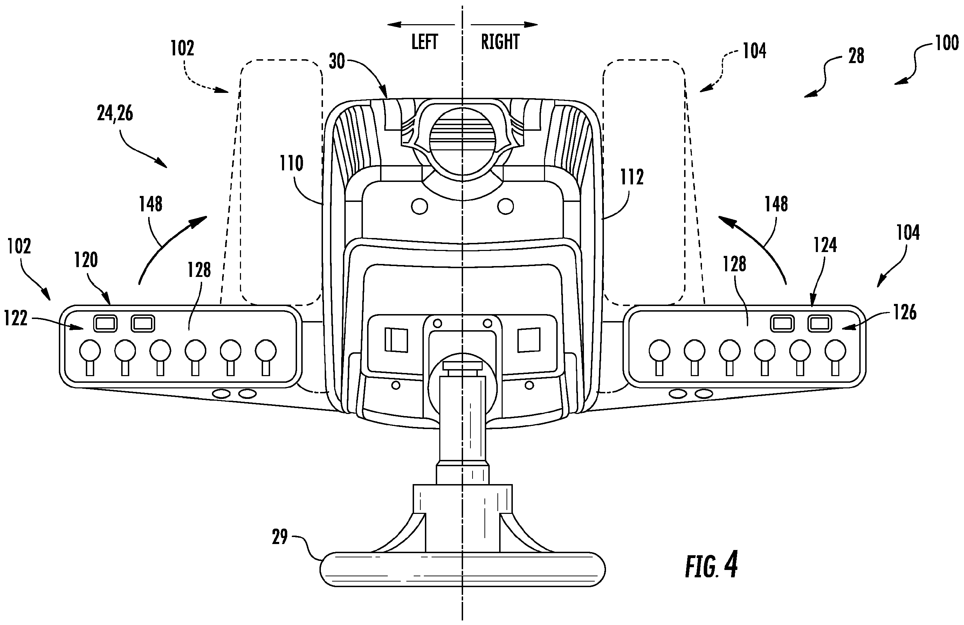

It should be appreciated that, as an alternative to removing the interface modules 102, 104, the modules 102, 104 may, instead, be configured to be pivoted or folded relative to the steering assembly 28 between an operational or working positions and a non-operational or stowed positions. For instance, FIG. 4 illustrates an alternative embodiment of the disclosed system 100 in which the module housings 120, 124 are pivotally coupled to the steering column 30. In such an embodiment, when it is desired to use the interface modules 102, 104 to control the operation of the motor grader 10, the modules 102, 104 may be provided in their operational or working positions (as shown in solid lines in FIG. 4), such as by orienting the module housings 120, 124 such that they extend lengthwise generally perpendicularly from the opposed sides 110, 112 of the steering column 30. However, when it is not desired to use the interface modules 102, 104 to control the operation of the motor grader 10, the modules 102, 104 may be pivoted or folded (e.g., as indicated by arrows 148 in FIG. 4) from their operational or working positions to their non-operational or stowed positions (as shown in dashed lines in FIG. 4), such as by folding the module housings 120, 124 inwardly such that they extend lengthwise generally parallel and adjacent to the opposed sides 110, 112 of the steering column 30.

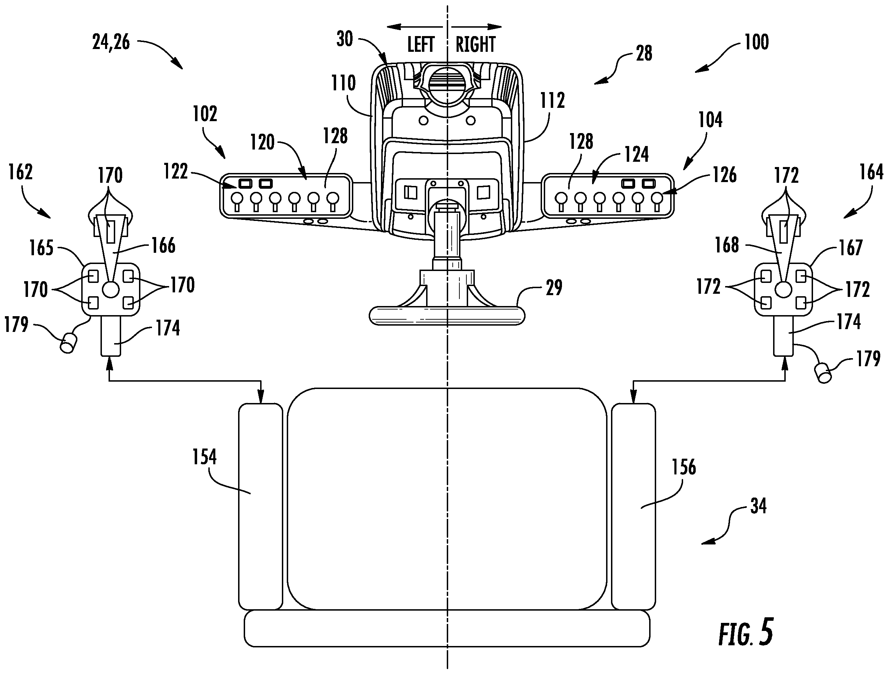

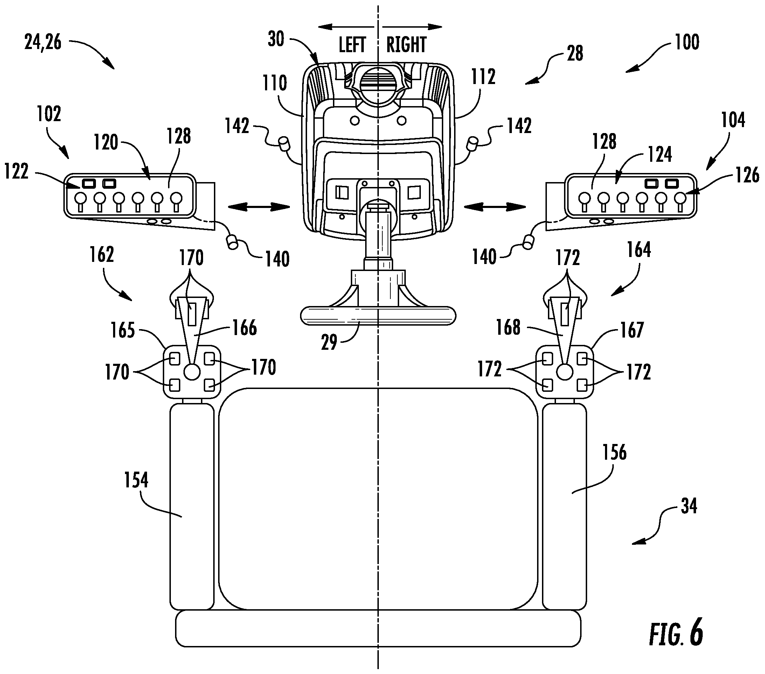

Referring now to FIGS. 5 and 6, a schematic view of another embodiment of components of a modular operator interface system 100 installed within a cab of a work vehicle is illustrated in accordance with aspects of the present subject matter. For purposes of description, the system components will generally be described with reference to being installed within the cab 24 of the motor grader 10 described above with reference to FIG. 1. However, it should be appreciated that, in other embodiments, the various system components may be installed within and/or otherwise used in connection with any other suitable work vehicle having any other suitable vehicle configuration.

As shown, the system 100 generally includes the interface modules 102, 104 described above, with the modules 102, 104 being configured to be installed relative to the steering assembly 28 of the motor grader 10. Specifically, in the illustrated embodiment, the interface modules 102, 104 are configured similar to that described above with reference to FIGS. 2 and 3 such that the modules 102, 104 are removable from the steering assembly 28 when they are not being used. However, in other embodiments, the interface modules 102, 104 may be configured similar to that described above with reference to FIG. 4 such that the modules 102, 104 are pivotable or foldable relative to the steering assembly 28 from their operational or working positions to their non-operational or stowed positions.

Additionally, as shown in FIGS. 5 and 6, the system 100 also includes first and second seat-based interface modules 162, 164 configured to be installed relative to the operator's seat 34 of the grader 10. Specifically, the first seat-based interface module 162 is configured to be installed along the left side of the seat 34, such as by mounting the interface module 162 at or adjacent to an end of a left-side armrest 154 of the seat 34. Similarly, the second seat-based interface module 164 is configured to be installed along the right side of the seat 34, such as by mounting the interface module 164 at or adjacent to an end of a right-side armrest 56 of the seat 34. As such, during operation of the work grader 10, the operator may interact with the first seat-based interface module 162 using his/her left hand and the second seat-based interface module 164 using his/her right hand.

As shown in the illustrated embodiment, the seat-based interface modules 162, 164 are configured as multi-function joystick modules. In such an embodiment, each interface module 162, 164 may generally include a joystick base configured to support a multi-function joystick along with one or more additional interface elements (e.g., buttons, switches, knobs, and/or the like). For instance, as shown in FIGS. 5 and 6, the first seat-based interface module 162 includes a first joystick base 165 and a first joystick 166 extending outwardly from the joystick base 165. The first seat-based interface module 162 also includes a plurality of additional first interface elements 170 supported on the first joystick base 165 and/or the first joystick 166. Similarly, the second seat-based interface module 164 includes a second joystick base 167 and a second joystick 168 extending outwardly from the joystick base 167. The second seat-based interface module 164 also includes a plurality of additional second interface elements 172 supported on the second joystick base 167 and/or the second joystick 168.

As shown in FIGS. 5 and 6, each seat-based interface module 162, 164 may be configured to be removably coupled to its respective side of the operator's seat 34, thereby allowing the interface modules 162, 164 to be removed as desired. For instance, as shown in FIG. 5, each seat-based interface module 162, 164 may include suitable mounting structure 174 configured to allow the module 162, 164 to be removably coupled to a portion of the seat 34 (e.g., a portion of the respective armrest 154, 156 or any other portion of the seat 34). In such an embodiment, as shown in FIG. 5, when it is not desirable to utilize the interface modules 162, 164 to control the operation of the motor grader 10, the modules 162, 164 may be decoupled from the seat 34 to permit the interface modules 162, 164 to be moved to a desired location (e.g., a storage location within the cab 24). Thereafter, if it is subsequently desired to again use the interface modules 162, 164 to control the operation of the motor grader 10, the interface modules 162, 164 may be reinstalled relative to the seat 34 (e.g., as shown in FIG. 6).

As an alternative to removably coupling the seat-based interface modules 162, 164 in the manner shown in FIGS. 5 and 6, the interface modules 162, 164 may, instead, be configured to be folded or pivoted out of the way when not in use. For instance, similar to the folding configuration described above with reference to FIG. 4, the seat-based interface modules 162, 164 may be pivotably coupled to the seat 34 to allow the modules 162, 164 to be folded down/sideways or otherwise pivoted out of the way when desired.

As indicated above, each of the first and second seat-based interface modules 162, 164 includes a plurality of interface elements 166, 168, 170, 172. In general, each interface element 166, 168, 170, 172 may correspond to an input element or component configured to allow the operator to provide an input to the system controller 180 (FIG. 7) (e.g., via communicative links 179) associated with a given control function for the motor grader 10, with each control function being associated with controlling the operation of one or more components of the motor grader 10.

In several embodiments, the interface elements 166, 168, 170, 172 of the seat-based interface modules 162, 164 may be configured to allow the operator to provide inputs to the system controller 180 that are associated with the same control functions as those associated with the interface elements 122, 126 of the interface modules 102, 104 configured to be installed relative to the steering assembly 28. In such embodiments, the differing pairs of interface modules may be interchangeable within the operator's cab 24 to reconfigure the interface arrangement as desired by the operator. For instance, if the operator prefers the interface arrangement provided by the interface modules 102, 104 configured to be positioned relative to the steering assembly 28, the operator may install the interface modules 102, 104 and ignore or remove the seat-based interface modules 162, 164. Similarly, if the operator prefers the interface arrangement provided by the seat-based interface modules 162, 164, the operator may install such interface modules 162, 164 relative to the operator's seat 24 and ignore or remove the interface modules 102, 104 from the steering assembly 28.

It should be appreciated that, in one embodiment, a common storage location (e.g., a pelican case) may be provided within the operator's cab 24 for storing the pair of the interface modules that are not currently being used. As such, when the operator desires to reconfigure the interface arrangement, he/she may simply access to the storage location to obtain the desired interface modules. In such an embodiment, upon removing the previously used interface modules, such modules may be stored within the common storage location for later use.

Referring now to FIG. 7, a schematic view of a further embodiment of a modular operator interface system 100 is illustrated in accordance with aspects of the present subject matter. In general, the system 100 will be described herein with reference to the work vehicle 10 described above with reference to FIG. 1 and the various interface modules 102, 104, 162, 164 described above with reference to FIGS. 2-6. However, it should be appreciated by those of ordinary skill in the art that the disclosed system 100 may generally be utilized in association with work vehicles having any other suitable vehicle configuration and/or interface modules having any other suitable interface configuration consistent with the disclosure provided herein.

As shown, the system 100 includes a controller 180 configured to electronically control the operation of one or more components of the work vehicle 10, such as the various hydraulic components of the work vehicle 10. For example, the controller 180 may be communicatively coupled to a plurality of electro-hydraulic (EH) valves 186 of the work vehicle 10, with each EH valve 186 being configured to regulate the supply of hydraulic fluid to a corresponding hydraulically-actuated component 188 of the work vehicle 10, such as the articulating adjustment cylinder 18, center shift cylinder 48, circle clocking drive 48, lift cylinders 50, 52, tilt cylinder 54, side shift cylinder 56, lean cylinders 58 of the motor grader 10. In addition, the controller 180 may also be configured to control the operation of any other suitable electronically-controlled components 190 of the work vehicle 10. For instance, the controller 180 may be communicatively coupled to a display 192 of the work vehicle 10 for displaying notifications and/or other vehicle information to the operator. As indicated above, the display 192 may, for example, be used to display suitable graphical user interfaces to the operator for assigning control functions to given interface elements of the interface modules.

In general, the controller 180 may comprise any suitable processor-based device known in the art, such a computing device or any suitable combination of computing devices. Thus, in several embodiments, the controller 180 may include one or more processor(s) 182 and associated memory device(s) 184 configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 184 of the controller 180 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) 184 may generally be configured to store suitable computer-readable instructions that, when implemented by the processor(s) 182, configure the controller 180 to perform various computer-implemented functions, such as the various aspects of the control functionality described herein. In addition, the controller 180 may also include various other suitable components, such as a communications circuit or module, one or more input/output channels, a data/control bus and/or the like.

It should be appreciated that the controller 180 may correspond to an existing controller of the work vehicle 10 or the controller 180 may correspond to a separate processing device. For instance, in one embodiment, the controller 180 may form all or part of a separate plug-in module that may be installed within the work vehicle 10 to allow for the disclosed system to be implemented without requiring additional software to be uploaded onto existing control devices of the vehicle 10.

As indicated above, the controller 180 may be configured to electronically control the operation of the various electronically controlled components of the work vehicle (e.g., the EH valves 186 and any other suitable components 190) based on inputs received from the operator via the interface modules. For instance, as shown in FIG. 7, when the first and second module interfaces 102, 104 are communicatively coupled to the controller 102, the controller 102 may be configured to control the operation of the work vehicle 10 based on operator inputs received from the various interface elements 122, 126 of the modules 102, 104. Similarly, when the seat-based module interfaces 162, 164 are communicatively coupled to the controller 102, the controller 102 may be configured to control the operation of the work vehicle 10 based on operator inputs received from the various interface elements 166, 168, 170, 172 of the modules 162, 164. As described above, suitable communicative links or cables may be provided between each interface module and the controller 180 (e.g., via the detachable connectors) to allow the interface modules to be communicatively coupled to the controller 180.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An operator interface system (100) for a work vehicle (10), the system (100) including a controller (180), the system (100) being **characterized by**:
a first interface module (102) configured to be installed within a cab (24) of the work vehicle (10) along a left side of a steering assembly (28) of the work vehicle (10), the first interface module (102) including a first module housing (120) and a plurality of first interface elements (122) supported by the first module housing (120) and communicatively coupled to the controller (180), the plurality of first interface elements (122) including one or more first EH-related interface elements (122) configured to provide one or more operator inputs to the controller (180) associated with one or more first EH-based control functions for the work vehicle (10); and
a second interface module (104) configured to be installed within the cab (24) of the work vehicle (10) along a right side of the steering assembly (28), the second interface module (104) including a second module housing (124) and a plurality of second interface elements (126) supported by the second module housing (124) and communicatively coupled to the controller (180), the plurality of second interface elements (126) including one or more second EH-related interface elements (126) configured to provide one or more operator inputs to the controller (180) associated with one or more second EH-based control functions for the work vehicle (10);
wherein the controller (180) is configured to control one or more components of the work vehicle (10) based on inputs received from the first (102) and second interface modules (104) during operation of the work vehicle (10).

2. The system (100) as in claim 1, wherein the first (102) and second interface modules (104) are installed relative to a steering column (30) of the steering assembly (28), the first module housing (102) coupled a first side (110) of the steering column (30) so as to be positioned along the left side of the steering assembly (28), the second module housing (104) coupled a second side (112) of the steering column (30) so as to be positioned along the right side of the steering assembly (28).

3. The system (100) as in claim 2, the first (120) and second module housings (124) are configured to be removably coupled to the steering column (30) to allow the first (102) and second interface modules (104) to be removed therefrom.

4. The system (100) as in claim 2, wherein the first (120) and second module housings (124) are configured to be pivotably coupled to the steering column (30) to allow the first (102) and second interface modules (104) to be pivoted relative to the steering column (30) between a working position and a stowed position.

5. The system (100) as in any preceding claim, further comprising first (162) and second seat-based interface modules (164) configured to be installed within the cab (24) relative to a seat (34) of the work vehicle (10), the first (162) and second seat-based interface modules (164) including respective first (170) and second seat-based interface elements (172) configured to provide one or more operator inputs to the controller (180) associated with the one or more first EH-based control functions and the one or more second EH-based control functions, respectively.

6. The system (100) as in claim 5, wherein the first (102) and second interface modules (1040 are configured to be removably coupled to the steering assembly (28) and the first (162) and second seat-based interface modules (164) are configured to be removably coupled to a portion of the seat (34) to allow an interface arrangement for the system (100) to be reconfigured between the first (102) and second interface modules (104) and the first (162) and second seat-based interface modules (164).

7. The system (100) as in claim 5, wherein the first (162) and second seat-based interface modules (164) comprise joystick modules configured to be coupled to a portion of the seat (34) at or adjacent to armrests (154, 156) of the seat (34).

8. The system (100) as in any preceding claim, wherein the work vehicle (10) comprises a work grader and the at least one of the one or more first EH-based control functions or the one or more second EH-based control functions comprises at least one of moldboard lifting, circle clocking, moldboard tilting, moldboard side shifting, drawbar side shifting, articulation adjustments, wheel lean adjustments, or drawbar center shifting.

9. The system (100) as in any preceding claim, wherein the controller (180) is communicatively coupled to a plurality of electro-hydraulic valves (186), each of the plurality of electro-hydraulic valves (186) being associated with an EH-based control function of the one or more first and second EH-based control functions, the controller (180) being configured to control an operation of a respective valve (186) of the plurality of electro-hydraulic valves (186) based on an input received from one of the one or more first (122) and second EH-related interface elements (126).

10. The system (100) as in any preceding claim, wherein the one or more first (122) and second EH-related interface elements (126) are assigned to control functions according to a predetermined interface arrangement.

11. The system (100) as in any preceding claim, wherein control functions associated with each of the one or more first (122) and second EH-related interface elements (126) are operator configurable.

12. A work vehicle (10) including an operator's cab (24) and a steering assembly (28) positioning within the cab (24), the work vehicle (10) being **characterized by**:
a first interface module (102) installed within the cab (24) along a left side of the steering assembly (28), the first interface module (102) including a first module housing (120) and a plurality of first interface elements (122) supported by the first module housing (120), the plurality of first interface elements (122) including one or more first EH-related interface elements (122) configured to provide one or more operator inputs associated with one or more first EH-based control functions for the work vehicle (10); and
a second interface module (104) configured to be installed within the cab (24) along a right side of the steering assembly (28), the second interface module (104) including a second module housing (124) and a plurality of second interface elements (126) supported by the second module housing (124), the plurality of second interface elements (126) including one or more second EH-related interface elements (126) configured to provide one or more operator inputs associated with one or more second EH-based control functions for the work vehicle (10);
a plurality of electro-hydraulic valves (186), each of the plurality of electro-hydraulic valves (186) being associated with an EH-based control function of the one or more first and second EH-based control functions; and
a controller (180) communicatively coupled to the first (122) and second interface elements (126) and the plurality of electro-hydraulic valves (186), the controller (180) being configured to control an operation of a respective valve (186) of the plurality of electro-hydraulic valves (186) based on an input received from one of the one or more first (122) and second EH-related interface elements (126).

13. The work vehicle (10) as in claim 12, wherein the first (102) and second interface modules (104) are installed relative to a steering column (30) of the steering assembly (28), the first module housing (102) coupled a first side (110) of the steering column (30) so as to be positioned along the left side of the steering assembly (28), the second module housing (104) coupled a second side (112) of the steering column (30) so as to be positioned along the right side of the steering assembly (28).

14. The work vehicle (10) as in any of claims 12 or 13, further comprising first (162) and second seat-based interface modules (164) configured to be installed within the cab (24) relative to a seat (34) of the work vehicle (10), the first (162) and second seat-based interface modules (164) including respective first (170) and second seat-based interface elements (172) configured to provide one or more operator inputs to the controller (180) associated with the one or more first EH-based control functions and the one or more second EH-based control functions, respectively.

15. The work vehicle (10) as in any of claims 12 through 14, wherein the work vehicle (10) comprises a work grader and the at least one of the one or more first EH-based control functions or the one or more second EH-based control functions comprises at least one of moldboard lifting, circle clocking, moldboard tilting, moldboard side shifting, drawbar side shifting, articulation adjustments, wheel lean adjustments, or drawbar center shifting.
